# EUROPEAN PATENT APPLICATION

(11) **EP 1 375 106 A2**
(43) Date of publication of application: **02.01.2004**
(21) Application number: 03020241.0
(22) Date of filing: 30.07.1999
(51) Int. Cl.: B29C 39/24, B29C 45/54, B29C 45/02, B29C 45/53

(54) **Moulding apparatus**

(30) Priority: 31.07.1998 ZA 9806866
(62) Divisional of application: 99974120.0
(71) Applicant: Lomold International Limited, Guernsey GY1 3HN (GB)
(72) Inventor: Human, Jan Petrus, 7646 Paarl (ZA)
(74) Representative: McDonough, Jonathan

(57) **Abstract**

The apparatus disclosed comprises a barrel (12) in which there is a piston (42) on a shaft (36). The shaft (36) can be moved axially and is surrounded by a feed screw (14). There is a shut-off valve (70) in the barrel (12). The feed screw (14) is used to fill a holding cavity (C) between the piston (42) and the valve (70). The valve is then opened and the piston (42) forces the charge from the cavity (C) into the moulding cavity (30). In its forward position, the piston (42) has its front face forming part of the bounding wall of the moulding cavity (30).

## Description

### FIELD OF THE INVENTION

THIS INVENTION relates to moulding apparatus and to a method of moulding.

### BACKGROUND TO THE INVENTION

Many types of moulding apparatus are known, the most widely used being injection moulding apparatus. Whilst this apparatus can make complex articles it does have limitations insofar as the materials it can mould are concerned. The present invention seeks to provide moulding apparatus which has attributes that injection moulding apparatus does not have.

### BRIEF DESCRIPTION OF THE INVENTION

According to a first aspect of the present invention there is provided a method of moulding an article which method comprises feeding a stream of mouldable material into a holding cavity through a feed opening in the bounding wall of said cavity until a charge of a predetermined volume is in the cavity, advancing a piston, a face of which forms part of said bounding wall of said holding cavity from a retracted position to a forward position to discharge said mouldable material from the holding cavity into a moulding cavity through a discharge opening which places said holding cavity in communication with the moulding cavity, said face, whilst said piston is in the forward position, being part of the bounding surface of the mould cavity, and said holding cavity being of constant cross-section between the position to which the piston retracts and said discharge opening, said front face of the piston being of the same cross-section as the constant cross section of the holding cavity.

According to a second aspect of the present invention there is provided a method of moulding in which mouldable material is fed to a holding cavity to fill the holding cavity, a forward end of the holding cavity being bounded by a valve structure and a rearward end by a piston, opening said valve structure after the holding cavity has been filled and advancing said piston from a retracted position through the holding cavity and through the valve structure to a forward position so that said front face of the piston displaces said mouldable material out of the holding cavity and into a moulding cavity, said front face of said piston becoming part of the bounding wall of the moulding cavity upon the piston reaching its forward position.

Vacuum can be applied to the moulding cavity as the charge of mouldable material is forced into the moulding cavity.

According to a third aspect of the present invention there is provided a method of moulding which comprises feeding mouldable material to a holding cavity in a barrel, the cavity being bounded on one side by a piston and on the other side by valve means which has an open condition and a closed condition, and moving the piston along the barrel through said valve means, whilst said valve means is in its open condition, thereby to displace a charge of material which was previously in said holding cavity into a moulding cavity.

In one form the charge is fed into said holding cavity through passages in the piston. In another form the piston is collapsible and the charge moves into the cavity between the piston and the barrel.

According to a fourth aspect of the present invention there is provided a moulding apparatus comprising means for feeding a stream of mouldable material into a holding cavity through a feed opening in the bounding wall of said cavity until a charge of predetermined volume is in said cavity, a piston having a forward position and a retracted position, a face of the piston forming part of said bounding wall of said holding cavity whilst the piston is in said retracted position, an opening in the bounding wall of said holding cavity for placing said holding cavity in communication with a moulding cavity, means for advancing said piston through said holding cavity from said retracted position to said forward position thereby to force said charge out of the holding cavity through said opening, said holding cavity being of constant cross section between the retracted position of the piston and said opening and the front face of the piston being of the same cross-section as said holding cavity and said opening, said face, when the piston has in use been displaced to said forward position, forming part of the bounding wall of the moulding cavity into which the mouldable material has been discharged.

Said feed opening can be constituted by said opening which places said holding cavity in communication with said moulding cavity. In another form said feed opening is a passage which passes through said piston and emerges through said face of the piston. In yet another form said feed opening is in the walling of said holding cavity between said opening and said retracted position of the piston.

According to a fifth aspect of the present invention there is provided a moulding apparatus comprising a component having a holding cavity therein, means for feeding mouldable material to said holding cavity to fill the holding cavity, valve means having a first position in which a front end of the holding cavity is closed and a second position in which a front end of the holding cavity is open, a piston having a front face, the feeding means serving to feed mouldable material to said holding cavity which is defined between said valve means and said front face whilst the valve means is in said first position, an opening which, in use, places said holding cavity in communication with a moulding cavity, and means for advancing said piston from a retracted position through the holding cavity and valve means to a forward position so that its front face displaces mouldable material out of said holding cavity through said opening, said front face of the piston, in use, becoming part of the bounding wall of the moulding cavity to which said opening leads.

According to a sixth aspect of the present invention there is provided a moulding apparatus comprising a barrel, shut-off means in the barrel and having a first position in which it blocks the barrel and prevents flow of material along the barrel and a second position in which flow of material along the barrel is permitted, a piston in the barrel, means for feeding mouldable material into a charge measuring holding cavity between said shut-off means and said piston, and means for advancing said piston from a retracted position to a forward position so that it displaces a charge of mouldable material in said chamber through the shut-off means.

The position to which the piston retracts is adjustable thereby to enable the volume of said holding cavity to be varied.

### BRIEF DESCRIPTION OF THE DRAWINGS

For a better understanding of the present invention, and to show how the same may be carried into effect, reference will now be made, by way of example, to the accompanying drawings in which:-
Figures 1 and 2 are longitudinal sections showing moulding apparatus according to the present invention in different operative conditions.
Figure 3 is a diagrammatic section illustrating part of the moulding apparatus to a larger scale;
Figure 4 illustrates a shut-off valve of the apparatus of Figure 1 to an enlarged scale;
Figure 5 is an "exploded" pictorial view of the shut-off valve of Figure 4;
Figure 6 shows the valve of Figure 5 when assembled; and
Figure 7 diagrammatically illustrates a further form of moulding apparatus.

### DETAILED DESCRIPTION OF THE DRAWINGS

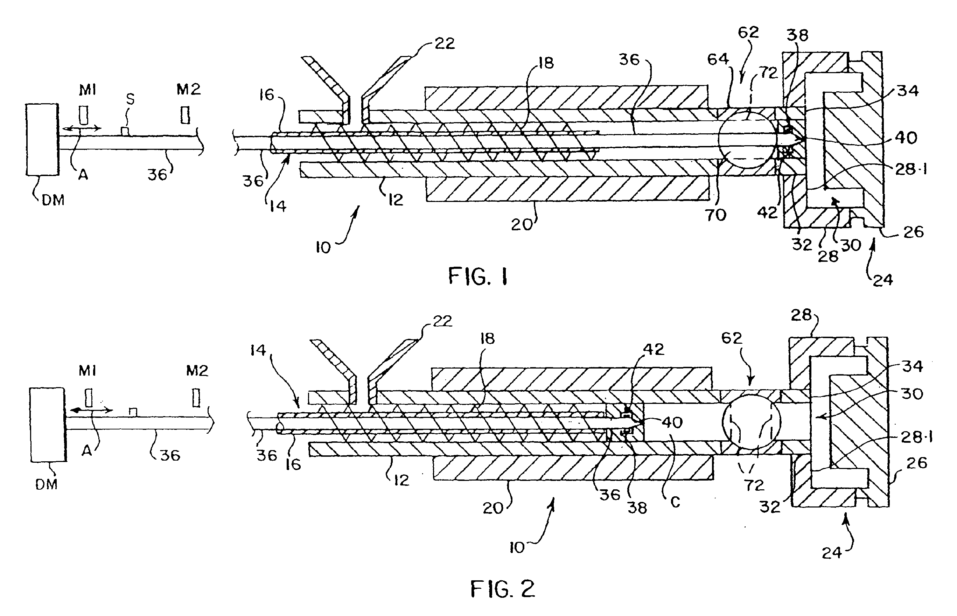

Referring firstly to Figures 1 and 2, the moulding apparatus 10 illustrated comprises an elongate melt barrel 12 which has therein a feed screw 14 comprising a sleeve 16 which carries a flight 18. A heating collar 20 encircles the barrel 12.

A hopper 22 leads into the rear end of the melt barrel 12 and pellets of synthetic plastics material feed into the flight 18 from the hopper 22.

A mould 24 comprising a male part 26 and a female part 28 bound a cavity 30 which has the shape of the article to be moulded. The female mould part 28 has a bore 32 therein and the leading end of the melt barrel 12 is inserted into the bore 32 and is a tight fit therein. The front end face 34 of the barrel 12 is flush with the surface 28.1 of the mould part 28 which bounds one side of the cavity 30.

A shaft 36 (see Figures 1, 2 and 3) slides within the sleeve 16. The end portions of the shaft 36 protrude beyond the sleeve 16 in both directions. A pneumatic or hydraulic cylinder, an hydraulic or electric motor of any other suitable drive means diagrammatically shown at DM in Figures 1 and 2, is provided for displacing the shaft 36 in forward and return strokes. At the rear end of the shaft 36, the left hand end in Figures 1 and 2, there are means which control the length of the stroke of the shaft 36. These means can be optical, mechanical or electromechanical and they control supply of power to the cylinder or motor which displaces the shaft 36 to and fro in the sleeve 16. In a simple form the shaft 36 carries a protruding striker S and there are micro-switches M1, M2 adjacent the shaft. At least the micro-switch M1 can be adjusted in position as shown by the double headed arrow A.

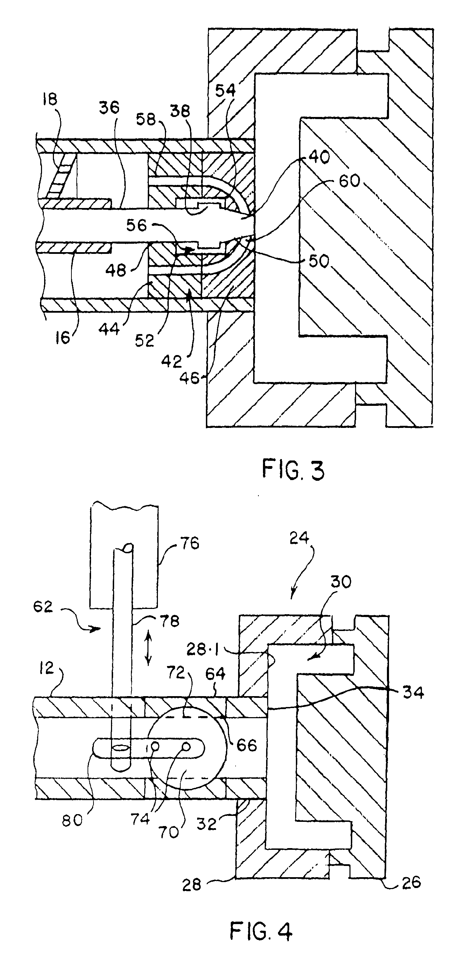

The shaft 36 has an enlarged head 38 (see Figure 3) at the forward end thereof, and a frusto conical portion 40 beyond the head 38. On the forward end of the shaft 16 there is a piston 42.

The piston 42 comprises two parts 44 and 46 which are bolted or otherwise secured together. The parts 44 and 46 have axial bores 48 and 50 therein for receiving the shaft 36. Encircling the bores 48 and 50, and in those faces of the parts 44 and 46 which abut one another, are recesses 52 and 54. The head 38 of the shaft 36 is within the cavity 56 constituted by the registering recesses 52 and 54. The bore 48 is cylindrical to match the circular cross-section of the shaft 36 and the bore 50 is of tapering form to match the portion 40. The cavity 56 is bigger than the head 38 both axially and radially.

The part 44 has flow passages 58 therein, the passages being arranged in a circular array around the bore 48. The passages 58 extend axially. Further flow passages 60 are provided in the part 46. The passages 60 are also arranged in a circular array, the inlets to the passages 60 registering with the exits from the passages 58. Each passage 60 curves inwardly from its inlet end and its exit is where it enters the bore 50.

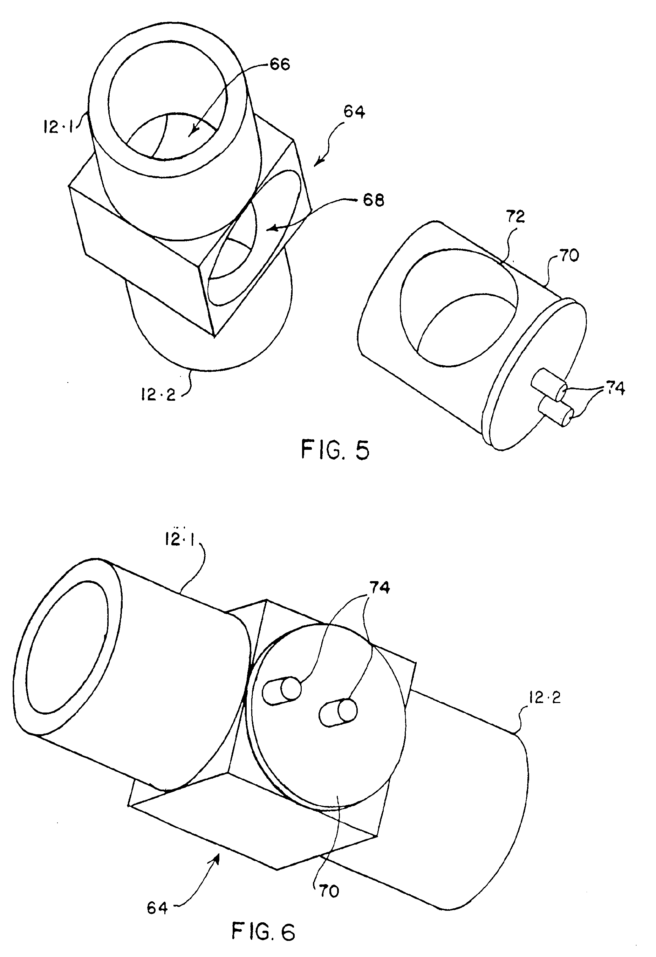

A shut-off structure generally designated 62 is located in the barrel 12 adjacent the leading end of the barrel 12. The structure 62 is only shown in outline in Figure 1 and is illustrated in more detail in Figures 4, 5 and 6. The structure 62 comprises a hollow block 64 which is located between two sections of the barrel 12. The sections are designated 12.1 and 12.2 in Figures 5 and 6. The block 64 has a first bore 66 therethrough which is of the same diameter as the inside diameter of the barrel and is co-axial with the barrel. The block 64 has a second bore 68 which extends transversely and receives a rotatable shut-off member 70. The member 70 is cylindrical and fits snugly in the bore 68. The member 70 itself has a transverse bore 72 which is of the same diameter as the bore 66 and the inside diameter of the barrel 12. Two pins 74 protrude from one end face of the member 70. The pins 74 are connected to an actuator 76 (Figure 4) by way of two rods 78 and 80. The actuator 76 can be, for example, a solenoid, which oscillates the rod 78 vertically. The rod 80 is connected to the pins 74 and is oscillated about an axis co-incident with the axis of the member 70.

In use of the apparatus, pellets of thermoplastic material entering the barrel 12 from the hopper 22 are mixed in the barrel by the shearing action of the flight 18. The pellets melt as a result of the heating and shearing to which they are subjected.

Whilst the shaft 36 is in the retracted position shown in Figure 2, the rotating screw 14 feeds molten plastic material against the rear face of the piston 42. The piston 42 is forced as far to the right with respect to the shaft 36 as the play of the head 38 in the cavity 56 will allow. Plastics material then flows through the passages 58 and 60 and part of the bore 50 into the chamber C (Figure 2) between the piston 42 and the structure 62. At this time the member 70 is so positioned that the bore 72 lies at right angles to the bore 66. The member 70 thus shuts off the left hand part of the barrel 12 from the right hand part and the mould cavity. The position to which the shaft 36 has retracted determines the volume of the chamber C.

A sensor (not shown) can be provided in conjunction with the screw 14 or in conjunction with the motor which drives it. Upon the chamber C filling, resistance to rotation of the screw 14 increases. This increased resistance can be used temporarily to terminate rotation of the screw.

The member 70 is then rotated through a right angle to align the bore 72 with the bore 66. The shaft 36 is then advanced to the right as viewed in Figures 1 and 2. The first part of the movement of the shaft 36 is relative to the piston 42. The portion 40 moves fully into the bore 50 and closes off the passages 60 thereby to prevent reverse flow of molten material.

The piston 42 moves along the barrel 12, enters the block 64, passes through the bore 72 and then through the remainder of the block 64. As the piston moves forward the plastics material which occupied the chamber C is pushed into the mould cavity 30. The front face of the part 46, when the shaft 36 is in its fully advanced position, lies flush with the face 34 of the melt barrel and forms part of the bounding wall of the cavity 30.

Once the plastics material in the mould cavity has hardened, the mould part 26 is retracted to enable ejector pins (not shown) to displace the moulded article out of the female mould part 28. The shaft 36 then moves back to the left. The play between the head 38 and the part 44 is first taken up and then the piston 42 moves to the left with the shaft to begin another cycle.

The volume of the chamber C is determined by the position of the micro-switch M1 which terminates the retraction of the shaft 36. If the micro-switch is moved to the right in Figures 1 and 2, retraction of the shaft stops early. The chamber C is thus of small volume. If the shaft retracts to the fullest extent possible, the chamber C is of its greater volume. By making some trial mouldings with too little plastics, and then moving the micro-switch M1 to the left, it is possible to so adjust the apparatus that the volume of the chamber C equals the volume of the cavity 30.

Whilst in the illustrated form of the apparatus there is a single chamber C, it is desirable to provide a multitude of barrels, chambers and shafts. The shafts can displace mouldable material into one mould cavity or a plurality of mould cavities.

In the first form one component having a volume equal to the total of the volumes of the chambers C can be made. In a second form a plurality of identical or different components can be formed. For example, all the components for one article can be produced in a single cycle. Because each chamber C is individually supplied with mouldable material, the components can be of different mouldable material and/or can be of different colours.

As the apparatus described does not include narrow gates, sprues and runners that block easily, it is believed that a much wider range of materials will be mouldable in the apparatus described than can be moulded with currently available injection moulding machines. For example, as there are no pin gates that can be blocked, it is believed that synthetic plastics materials with fibres dispersed therein can be moulded. Provided the materials used in the construction of the apparatus are able to withstand the temperatures which must be attained, it is believed that the moulding of glass and ceramic articles will be possible.

It is possible for the piston to be collapsible and not have passages therethrough. In this form the material is fed to the chamber C around the periphery of the piston. The piston is then expanded before being displaced along the barrel.

In a further modified form the piston is a unit similar to that shown and includes a longitudinal bore and a transverse bore. A closure member, equivalent to the closure member 70, is provided in the transverse bore. The transverse closure member includes gear teeth which mesh with stationary gear teeth in the barrel. Engagement between the two sets of teeth rotates the closure member between its open and closed positions. Thus no flow past the piston is permitted whilst it is moving forward, but flow is permitted to enable the chamber C to be filled. It is also possible to provide a gate which slides transversely and which has a hole in it through which the piston 42 can pass.

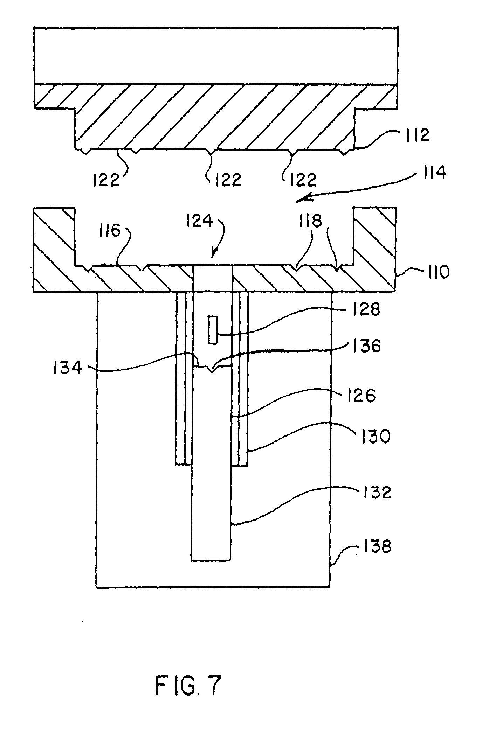

In Figure 7 reference numeral 110 designates the fixed component of a mould, the movable component being designated 112, and the moulding cavity 114. The cavity 114 is bounded by a first mould wall surface 116 which, simply for the sake of illustration, is shown as having a series of hemispherical depressions 118 therein and a second mould wall surface 120 which is shown as having a corresponding series of hemispherical protuberances 122. The mould is shown in its open condition with the mould components 110 and 112 spaced apart. The mould component 110 has a bore 124 therein of circular cross-section, the bore 124 opening into the cavity 114.

A fixed, that is, non-rotatable sleeve 126 is secured to the mould component 110, the sleeve 126 having an elongate slot 128 through the wall thereof. The sleeve 126 is within, and is co-axial with, a rotatable sleeve 130. The sleeve 130 also has a slot (not shown) in its wall. The two slots in the sleeve walls register when the outer sleeve 130 is in a first position and are out of register when the outer sleeve 130 is in a second position.

A piston 132 slides in the inner sleeve, the piston being circular in cross-section. A front surface of the piston is designated 134. For the sake of illustration the piston front surface 134 is shown as including a depression 136 matching the depressions 118 in shape and size.

'The piston 132 is reciprocable between the retracted position illustrated and a forward position where the front surface 134 lies in register with the surface 116 and forms a part of the bounding surface of the mould cavity,

The structure including the two sleeves 126 and 130 and the piston 132 is within a heated jacket 138. The jacket 138 is heated to a temperature sufficient to maintain a body of synthetic plastics material in the jacket in molten form. The molten plastics material in the jacket, as it is used, is replaced by further material fed in by an extruder screw (not shown).

The means for oscillating the sleeve 130 and reciprocating the piston 132 have not been shown but can comprise an hydraulic or pneumatic cylinder, or an electric motor driving a pinion meshing with a rack carrying the piston 132.

At the beginning of a cycle, the mould has closed, the two components 110 and 112 being clamped together. The cavity 114 is in the form of a thin rectangle with depressions in one side and protuberances entering the depressions from the other side. The piston 132 is in the position illustrated and the slots in the sleeves 126, 130 are out of register. There is a charge of synthetic plastics material in the sleeve 126. The volume of this charge exactly equals the volume of the moulding cavity 114.

The piston 132 moves from the position illustrated to the position in which the front surface 134 of the piston is in register with the surface 116 of the mould and hence becomes part of the moulding cavity's bounding surface. Because the volume of the charge equals the volume of the moulding cavity, the moulding cavity is completely filled. As the piston moves in the sleeve 126, the volume of the jacket that is left empty by the advancing piston is re-filled.

After cooling, the mould components 110 and 112 separate and the piston 132 starts to withdraw to the position shown in Figure 7. Simultaneously the sleeve 130 is rotated to bring the slots into register. The retracting piston 132 occupies an increasing volume of the space in the jacket 138 and as a result mouldable material is forced through the registering slots and into the sleeve 126. The volume of the charge is thus equal to the area of the piston 132 multiplied by its displacement.

Immediately the piston 132 reaches the end of its travel, the sleeve 130 rotates to displace the outer slot to a position out of register with the slot 128.

The mould component 112, after ejection of the manufactured article, moves back towards the component 110 to close the mould and commence the next cycle.

The apparatus illustrated in Figure 7 does not require gates, sprues or hot runners. The cross-sectional shape and dimensions of the cylinder in which the piston moves are constant from where the bore 124 enters the mould cavity to the position occupied by the face 134 of the piston when the piston is fully retracted. The cylinder is, of course, defined partly by the bore 124 and partly by the sleeve 126.

The position to which the piston 132 is retracted can be varied to change the volume of the charge, and this can be effected as described above with respect to Figures 1 and 2.

Vacuum can be applied to the moulding cavity as the charge of mouldable material is forced into the moulding cavity.

## Claims

1. Moulding apparatus comprising means for feeding a stream of mouldable material into a holding cavity through a feed opening in the bounding wall of said cavity until a charge of predetermined volume is in said cavity, a piston having a forward position and a retracted position, a face of the piston forming part of said bounding wall of said holding cavity whilst the piston is in said retracted position, an opening in the bounding wall of said holding cavity for placing said holding cavity in communication with a moulding cavity, means for advancing said piston through said holding cavity from said retracted position to said forward position thereby to force said charge out of the holding cavity through said opening, said holding cavity being of constant cross section between the retracted position of the piston and said opening and the front face of the piston being of the same cross section as said holding cavity and said opening, said face, when the piston has in use been displaced to said forward position, forming part of the bounding wall of the moulding cavity into which the mouldable material has been discharged, the position to which the piston retracts being adjustable thereby to enable the volume of said holding cavity to be varied.

2. A moulding apparatus as claimed in claim 1, further comprising means for adjusting the position to which the piston retracts.

3. A moulding apparatus as claimed in either of the claims 1 or 2, wherein said feed opening is constituted by said opening which places said holding cavity in communication with said moulding cavity.

4. A moulding apparatus as claimed in any one of claims 1 to 3, wherein said feed opening is a passage which passes through said piston and emerges through said face of the piston.

5. A moulding apparatus as claimed in any one of claims 1 to 4, wherein said feed opening is in the walling of said holding cavity between said opening and said retracted position of the piston.
